# EUROPEAN PATENT SPECIFICATION

(11) **EP 3 228 399 B1**
(45) Date of publication and mention of the grant of the patent: **04.05.2022**
(21) Application number: 15866217.1
(22) Date of filing: 04.11.2015
(51) Int. Cl.: G01N 3/28

(54) **METHODS FOR EVALUATING AND MANUFACTURING HOT-PRESS FORMED ARTICLE**
VERFAHREN ZUR BEURTEILUNG UND HERSTELLUNG EINES HEISSPRESSGEFORMTEN ARTIKELS
PROCÉDÉS D'ÉVALUATION ET DE FABRICATION D'UN ARTICLE FORMÉ PAR PRESSAGE À CHAUD

(30) Priority: 02.12.2014 JP 2014243704
(43) Date of publication of application: 11.10.2017
(73) Proprietor: JFE Steel Corporation, Tokyo 100-0011 (JP)
(72) Inventor: MINOTE, Toru, Tokyo 100-0011 (JP); NAKAGAITO, Tatsuya, Tokyo 100-0011 (JP); TOKITA, Yuichi, Tokyo 100-0011 (JP); TAMAI, Yoshikiyo, Tokyo 100-0011 (JP)
(74) Representative: Grünecker Patent- und Rechtsanwälte PartG mbB
(86) International application number: PCT/JP2015/005526
(87) International publication number: WO 2016/088296

(56) References cited:
- EP-A1- 1 985 989
- EP-A1- 2 136 197
- WO-A1-2013/147228
- WO-A1-2014/156790
- JP-A- 2008 246 542
- JP-A- 2012 197 505
- JP-A- 2014 201 799
- JP-A- 2015 116 575
- JP-A- 2015 213 958
- JP-B2- 5 825 447

## Description

### TECHNICAL FIELD

The disclosure relates to a method of evaluating a hot stamped part and a method of manufacturing a hot stamped part. and particularly relates to an evaluation method and manufacturing method for a hot stamped part manufactured by hot stamping a coated steel sheet having a Zn-Ni coating layer on the surface of a base steel sheet.

### BACKGROUND

In response to recent demand for high-strengthened and thinned automotive parts, steel sheets used in automotive parts have been increasingly high-strengthened. This, however, causes lower press-formability and makes it difficult to form a steel sheet into a desired part shape.

Hot stamping technology is known to solve such a problem. In hot stamping technology, while press forming a steel sheet into a desired shape using a tool of press forming after heating the steel sheet to a high temperature, heat removal is performed in the tool of press forming to quench the steel sheet, thus obtaining a high strength press formed part.

For example, GB 1490535 A (PTL 1) proposes a technique of, when manufacturing a part having a predetermined shape by press forming a steel sheet (blank sheet) heated to an austenite single phase region of around 900 °C. quenching the steel sheet in a tool of press forming simultaneously with the press forming, to high-strengthen the part.

However, the technique proposed in PTL 1 has a problem in that iron oxide (hereafter also referred to as "oxided scale") forms on the surface of the blank sheet when heating the blank sheet to a high temperature of around 900 °C before the press forming, and the oxided scale peels during the press forming and damages the tool of press forming or damages the surface of the press formed part. The oxided scale remaining on the surface of the part also causes poor appearance and low coating adhesion. Accordingly, the oxided scale on the surface of the part is usually removed by a treatment such as pickling or shot blasting. Such a treatment, however, leads to lower productivity.

Automotive suspension parts, automotive body parts, and the like are also required to have excellent corrosion resistance. However, the blank sheet used by the technique proposed in PTL 1 is not provided with a rust preventive coating such as a coating layer, and so the formed part manufactured according to this technique does not have sufficient corrosion resistance.

For these reasons, there has been demand for a hot stamping technique that can suppress the formation of oxided scale during the heating before the press forming and improve the corrosion resistance of the hot stamped part. Techniques of hot stamping a coated steel sheet having a coating such as a coating layer on its surface have been proposed in response to this demand.

For example, JP 2001-353548 A (PTL 2) proposes a technique of heating a coated steel sheet coated with Zn or a Zn-based alloy to 700 °C to 1200 °C and then press forming the coated steel sheet, to obtain a formed part having a Zn-Fe-based alloy or a Zn-Fe-Al-based alloy on its surface. PTL 2 describes that the use of the coated steel sheet coated with Zn or a Zn-based alloy can suppress problematic oxidation on the surface of the coated steel sheet during the heating before the forming, and enables the obtainment of a formed part with excellent corrosion resistance.

With the technique proposed in PTL 2, oxided scale which forms on the surface of the formed part is suppressed to some extent. In this case, however, liquid metal embrittlement cracking caused by Zn in the coating layer may occur, inducing one or more cracks of about 100 µm in depth in the surface layer of the formed part. The occurrence of such cracks leads to various drawbacks such as a decrease in fatigue resistance of the formed part.

To solve this problem, JP 2013-091099 A (PTL 3) proposes a technique of heating a coated steel sheet having a Zn-Fe-based coating layer on the surface of a base steel sheet to the Ac₁ transformation temperature of the steel sheet or more and 950 °C or less, cooling the coated steel sheet to the solidification point of the coating layer or less, and then starting forming the coated steel sheet. PTL 3 describes that liquid metal embrittlement cracking can be suppressed by starting press forming after cooling the coated steel sheet to the solidification point of the coating layer or less.

Further prior art can be found in the following publications:

WO 2013/147228 discloses an evaluation method of cracks based on a computer model.

WO 2014/156790 disclose a determination of maximum cracking depths in coated steels to find parameters to determine cracking appearance. This is done by physical inspection.

EP 1 985 989 and EP 2 136 197 shows computer simulations of a stamping process which are used to predict fracture of the sample during the drawing process in dependence on the strain in the sample.

### CITATION LIST

### Patent Literatures

PTL 1: GB 1490535 A
PTL 2: JP 2001-353548 A
PTL 3: JP 2013-091099 A

### SUMMARY

### (Technical Problem)

The technique proposed in PTL 3 seems to suppress liquid metal embrittlement cracking, i.e. cracks that occur on the surface of the formed part, have a depth of about 100 µm from the coating layer-substantial steel (steel sheet) interface toward the interior of the substantial steel, and have Zn detected in the interface of the cracked portion.

To suppress such liquid metal embrittlement cracking, we considered hot stamping of a coated steel sheet having a Zn-Ni alloy coating in which about 9 mass% to 25 mass% Ni is contained in Zn as a coating layer with a high fusing point. The reason for selecting the Zn-Ni alloy coating is as follows. The γ phase in the phase equilibrium diagram of the Zn-Ni alloy has excellent corrosion resistance and also has a very high fusing point of 860 °C or more as compared with a typical Zn-based coating layer, so that liquid metal embrittlement cracking can be effectively suppressed even under a typical hot stamping condition.

However, it is known that not the aforementioned liquid metal embrittlement cracking but one or more minuscule cracks occur on the surface of the formed part manufactured using the coated steel sheet having the Zn-Ni alloy coating. The minuscule cracks have a depth of about 30 µm or less from the coating layer-substantial steel interface toward the interior of the substantial steel, and have no Zn detected in the interface of the cracked portion. Such minuscule cracks are called micro-cracks. Micro-cracks pass through the coating layer-substantial steel interface and reach the interior of the substantial steel. and adversely affect various properties of the formed part such as fatigue resistance.

For example, suppose a press formed part having a hat cross-sectional shape is manufactured using a die and a punch. Conventionally known liquid metal embrittlement cracking occurs even in a portion subjected to only tensile strain, such as the punch contact-side surface of the vertical wall portion. Micro-cracks do not occur in such a portion, but occur in a portion subjected to bend restoration tensile strain after bending compression, such as the die contact-side surface of the vertical wall portion and particularly the portion of the vertical wall portion coming into contact with the end of the R-portion of the shoulder of the die during the forming. Thus, liquid metal embrittlement cracking and micro-cracks seem to occur by different mechanisms.

The technique in PTL 3 can suppress liquid metal embriulement cracking in the coated steel sheet having the Zn-Fe-based coating layer. but does not at all concern micro-cracks in the coated steel sheet having the Zn-Ni coating layer. The technique in PTL 3 is therefore not necessarily effective for the suppression of micro-cracks.

Since micro-cracks are minuscule in size with a depth of about 30 µm or less as mentioned above, evaluating the occurrence of micro-cracks in the manufactured press formed part requires complicated work such as cutting a test piece out of each portion of the press formed part and observing it using a scanning electron microscope (SEM) or the like. Such evaluation of the occurrence of micro-cracks in the hot stamped part is not practical in terms of productivity and cost. It is therefore necessary to develop a simple method of evaluating micro-cracks in a hot stamped part manufactured using a coated steel sheet having a Zn-Ni-based coating layer. as well as a technique of manufacturing a hot stamped part without micro-cracks.

It could be helpful to provide a simple hot stamped part evaluation method of evaluating the maximum micro-crack depth in a hot stamped part manufactured by heating and then press forming a coated steel sheet having a Zn-Ni-based coating layer on its surface, and a hot stamped part manufacturing method that suppresses micro-cracks degrading fatigue life.

### (Solution to Problem)

We studied means for suppressing problematic micro-cracks in hot stamping of a Zn-based coated steel sheet.

Although the mechanism by which micro-cracks occur in hot stamping is not clear, micro-cracks occur on the surface of a Zn-based coated steel sheet in the case of press forming the coated steel sheet at a high temperature, and micro-cracks equally occur on the surface of a Zn-Ni coated steel sheet in the case of press forming the coated steel sheet. These micro-cracks are minuscule cracks with a depth of 30 µm or less from the coating layer-substantial steel (steel sheet) interface, and pass through the coating layer-substantial steel interface and reach the interior of the substantial steel.

We manufactured a hot stamped part by hot stamping, and cut a test piece from each of various portions of the hot stamped part. We measured the micro-crack depth h and also conducted a fatigue test on each test piece, to study the relationship between the fatigue life and the micro-crack depth h in the test piece.

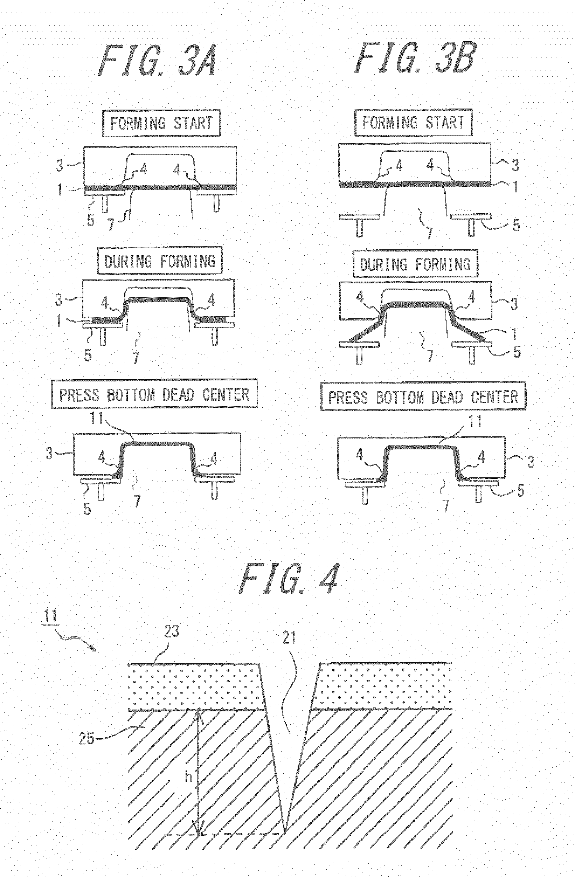

The micro-crack depth h mentioned here is the distance from the interface between a coating layer 23 and substantial steel (steel sheet) 25 of a test piece (hot stamped part 11) to the end of a micro-crack 21, as illustrated in FIG. 4.

As a result, we discovered that, even when the test piece had a micro-crack, the fatigue life of the test piece was comparable to that of a test piece with no micro-crack if the micro-crack depth h was 20 µm or less.

We also conducted a computer simulation of hot stamping (hot press forming analysis) under the forming condition when manufacturing the hot stamped part, calculated the equivalent plastic strain in the surface layer of the hot stamped part at the press bottom dead center, and researched the correlation between the analyzed equivalent plastic strain and the measured micro-crack depth in each portion of the surface layer.

The measured micro-crack depth mentioned here is the maximum micro-crack depth actually measured in the portion corresponding to each element of the hot stamped part modeled in the forming analysis.

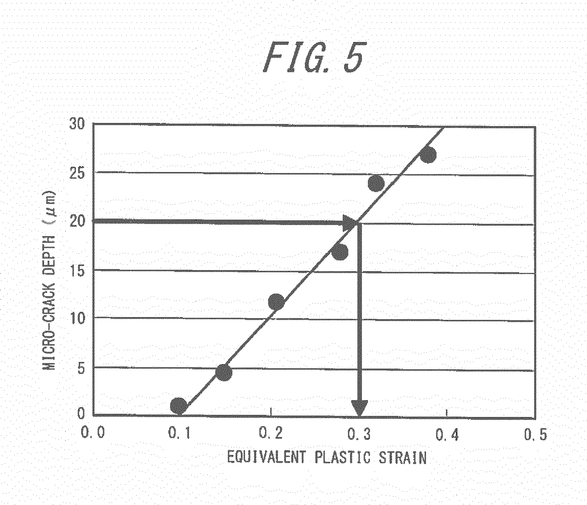

As a result, we found out that the analyzed equivalent plastic strain and the measured micro-crack depth in each portion of the surface layer correlated to each other, as illustrated in FIG. 5. We also discovered that the use of this correlation made it possible to evaluate, from the equivalent plastic strain in the surface layer of the hot stamped part calculated by the forming analysis, the maximum micro-crack depth in the hot stamped part manufactured under the same condition as the forming condition used in the forming analysis.

We further discovered that, by determining the appropriateness of the forming condition based on the maximum micro-crack depth evaluated from the equivalent plastic strain obtained by the forming analysis and manufacturing the hot stamped part under the forming condition determined as appropriate, a hot stamped part with excellent fatigue resistance was able to be manufactured.

The disclosure is based on the aforementioned discoveries. The invention is set out in the appended claims.

### (Advantageous Effect)

It is thus possible to evaluate the maximum micro-crack depth based on the equivalent plastic strain in the surface layer of the hot stamped part obtained by the forming analysis. Hence, whether or not the degradation in fatigue life of the hot stamped part is within a tolerable range can be evaluated by a simple method without requiring complicated work, with there being no need to perform actual press forming.

### BRIEF DESCRIPTION OF THE DRAWINGS

In the accompanying drawings:
FIG. 1 is an explanatory diagram of a method of evaluating a hot stamped part according to an example of Embodiment I of the disclosure;
FIG. 2 is an explanatory diagram of a hot stamped part having a hat cross-sectional shape;
FIG. 3A is an explanatory diagram of an example of a press forming method;
FIG. 3B is an explanatory diagram of an example of a press forming method;
FIG. 4 is an explanatory diagram of the definition of micro-crack depth;
FIG. 5 is a diagram illustrating an example of the correlation between the equivalent plastic strain and the maximum micro-crack depth;
FIG. 6A is an explanatory diagram of an example of a method of calculating, by extrapolation, the equivalent plastic strain on the surface of a steel sheet from the equivalent plastic strain at each integration point in the sheet thickness direction;
FIG. 6B is an explanatory diagram of an example of a method of calculating, by extrapolation, the equivalent plastic strain on the surface of a steel sheet from the equivalent plastic strain at each integration point in the sheet thickness direction;
FIG. 7 is an explanatory diagram of a method of manufacturing a hot stamped part according to an example of Embodiment 2 of the disclosure; and
FIG. 8 is an explanatory diagram of a hot stamped part according to an example.

### DETAILED DESCRIPTION

### (Embodiment 1)

A method of evaluating a hot stamped part according to Embodiment 1 of the disclosure performs forming analysis when heating and press forming a coated steel sheet having a Zn-Ni coating layer on the surface of a base steel sheet, and evaluates the maximum micro-crack depth of a hot stamped part based on the result of the forming analysis.

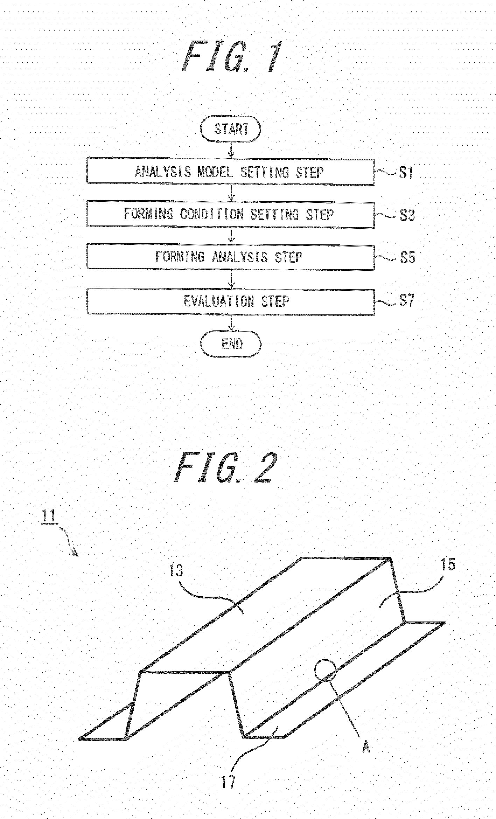

The method of evaluating a hot stamped part according to Embodiment 1 of the disclosure includes an analysis model setting step (S1), a forming condition setting step (S3), a forming analysis step (S5). and an evaluation step (S7), as illustrated in FIG. 1.

The following describes the hot stamped part and each of the steps (S1 to S7) in detail. These steps are performed using a computer.

### <Hot stamped part>

A hot stamped part 11 used in Embodiment 1 includes a top portion 13, a vertical wall portion 15, and a flange portion 17 and has a hat cross-sectional shape, as illustrated in FIG. 2 as an example.

As mentioned earlier, we discovered that, in the hot stamped part 11 having such a shape, micro-cracks occurred in a portion of the vertical wall portion 15 coming into contact with a shoulder R end 4 of the die. This portion corresponds to, for example, a surface of a portion of the vertical wall portion 15 that is formed from the flange portion 17 passing over the shoulder R-portion of the die with the progress of the press forming. Such portion is subjected to compressive strain by bending and compression by the shoulder R-portion of a die used for press forming and then subjected to tensile strain by bend restoration in the vertical wall portion.

### <Analysis model setting step>

The analysis model setting step (S1) is a step of setting the properties. etc. of the blank sheet to be processed and creating an analysis model of the hot stamped part.

The properties of the blank sheet include sheet thickness, shape, thermal properties (specific heat, thermal conductivity, etc.), and mechanical properties (Young's modulus, stress-strain curve, etc.). In hot stamping, the temperature of the blank sheet changes during press forming, so that the thermal properties, mechanical properties, etc. are preferably temperature-dependent data.

To analyze heat transfer by the contact between the tool of press forming and the blank sheet, the contact thermal resistance of the tool of press forming and the blank sheet is provided to the analysis model. Moreover, to take heat conduction inside the tool of press forming into consideration, the thermal properties (specific heat. thermal conductivity, etc.) of the material of the tool of press forming are also provided to the analysis model. These are preferably temperature-dependent data.

The analysis model of the hot stamped part is, for example, obtained by modeling using shell elements for three-dimensional analysis.

In the case of modeling the hot stamped part using shell elements, integration points need to be set in the sheet thickness direction of the blank sheet as the raw material, in order to calculate the strain of the hot stamped part. Since micro-cracks are minuscule cracks with a depth of 30 µm or less, in Embodiment 1 it is preferable to set the number of integration points in the sheet thickness direction so that the position of the integration point closest to the surface of the blank sheet from among the integration points set in the sheet thickness direction is 30 µm or less.

The position of the integration point in the sheet thickness direction differs depending on the number of integration points set for the numerical integral in the hot press forming analysis. For example, suppose Gauss-Legendre quadrature is used for the numerical integral. In the case where the number of integration points is 5, the position of the integration point in the outermost layer closest to the surface of the blank sheet is at 5% of the sheet thickness from the surface of the blank sheet toward the center in the sheet thickness direction. In the case where the number of integration points is 7, the position of the integration point in the outermost layer closest to the surface of the blank sheet is at 2.5% of the sheet thickness from the surface of the blank sheet toward the center in the sheet thickness direction. In the case where the number of integration points is more than 7, the integration point in the outermost layer is closer to the surface of the blank sheet.

In detail, in the case where the sheet thickness of the blank sheet is 1.2 mm, the position of the integration point in the outermost layer is 60 µm from the surface of the blank sheet when the number of integration points is 5, and 30 µm when the number of integration points is 7. Accordingly, when the blank sheet has a sheet thickness of 1.2 mm, the position of the integration point in the outermost layer can be made 30 µm or less by setting the number of integration points to 7 or more.

### <Forming condition setting step>

The forming condition setting step (S3) is a step of setting the forming condition in the hot stamping.

The press forming method is important in the forming condition. Examples of the press forming method include deep drawing illustrated in FIG. 3A and crash forming illustrated in FIG. 3B.

Deep drawing is a method of press forming a blank sheet 1 in the state of sandwiching the blank sheet I between a die 3 and a blank holder 5. The force (blank holding force) of pressing the blank sheet 1 by the blank holder 5 is one of the elements of the press forming condition in deep drawing.

Crash forming is a method of locating the blank holder 5 at the position of the press bottom dead center where the blank holder 5 is not in contact with the blank sheet 1 at the forming start, and press forming the blank sheet 1 without the blank holder 5. Reference sign 4 is the shoulder R end of the die.

The other forming conditions include the displacement-time curve of the die 3 and the heating temperature of the blank sheet 1. The hot stamping can be analyzed in more detail by taking into consideration the temperature history of the blank sheet 1 involving the heating of the blank sheet 1 by a heating device and the cooling during the conveyance from the heating device to a press machine. Practically, however, it is sufficient to merely provide the initial temperature of the blank sheet 1 at the press forming start as the forming condition.

Thus, in the forming condition setting step, the initial temperature of the blank sheet 1 at the press forming start is set, and whether or not the temperature history of the blank sheet 1 is taken into consideration is set.

### <Forming analysis step>

The forming analysis step (S5) is a step of performing forming analysis using the analysis model set in the analysis model setting step (S1) under the forming condition set in the forming condition setting step (S3).

For example, the forming analysis can be performed using structural analysis software according to the finite element method (FEM).

The equivalent plastic strain in the surface layer of the hot stamped part at the press bottom dead center is calculated through the forming analysis. The equivalent plastic strain is calculated at the position of each integration point in the sheet thickness direction.

In the calculation of the equivalent plastic strain in the forming analysis step, the surface layer is preferably the region of up to 30 µm in the depth direction from the surface of the hot stamped part.

### <Evaluation step>

The evaluation step (S7) is a step of evaluating the maximum micro-crack depth in the hot stamped part manufactured under the forming condition, based on the equivalent plastic strain in the surface layer of the hot stamped part 11 calculated in the forming analysis step (S5).

In the evaluation step. it is important to evaluate the maximum micro-crack depth using the correlation between the equivalent plastic strain in the surface layer of the hot stamped part and the maximum micro-crack depth in the hot stamped part, which has been obtained beforehand based on the equivalent plastic strain calculated in the forming analysis step.

FIG. 5 illustrates an example of the correlation between the equivalent plastic strain in the surface layer of the hot stamped part and the maximum micro-crack depth in the hot stamped part.

FIG. 5 plots, against the equivalent plastic strain (horizontal axis) obtained by the forming analysis at the integration point of 30 µm from the surface in each of various shell elements of the modeled hot stamped part, the maximum micro-crack depth (vertical axis) measured in a portion of a predetermined range at the position corresponding to the shell element in the actually manufactured hot stamped part.

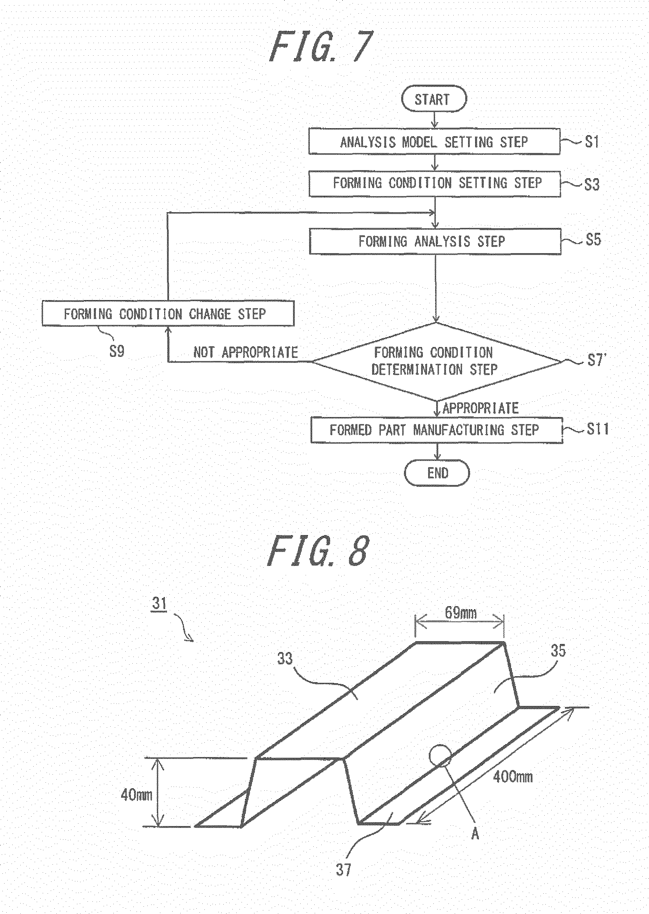

The hot stamped part used here has the shape illustrated in FIG. 8. The coated steel sheet as the raw material and the forming condition used in the forming analysis and the manufacture are the same as the condition No. 1 in Table I in the below-mentioned Example 1.

The equivalent plastic strain in the surface layer of the hot stamped part 11 calculated by the forming analysis differs depending on the position in the sheet thickness direction. Accordingly, in Embodiment 1, any of the following (A) and (B) is used as the equivalent plastic strain in the surface layer: (A) the value of equivalent plastic strain at the integration point closest to the surface of the hot stamped part 11 (preferably at the same depth position within 30 µm from the surface); and (B) the value of equivalent plastic strain in the surface of the hot stamped part 11 calculated by extrapolation on the value of equivalent plastic strain at each integration point in the sheet thickness direction.

In the case of (A), the position of the integration point closest to the surface of the hot stamped part 11 from among the integration points in the sheet thickness direction is preferably within 30 µm from the surface of the hot stamped part 11.

For example in the case where the sheet thickness of the coated steel sheet is 1.2 mm, the number of integration points needs to be 7 or more so that the position of the integration point closest to the surface from among the integration points in the sheet thickness direction is within 30 µm from the surface of the hot stamped part 11, as described with regard to the analysis model setting step (S1). If the number of integration points is less than 7, the position of the integration point closest to the surface is 30 µm or more away.

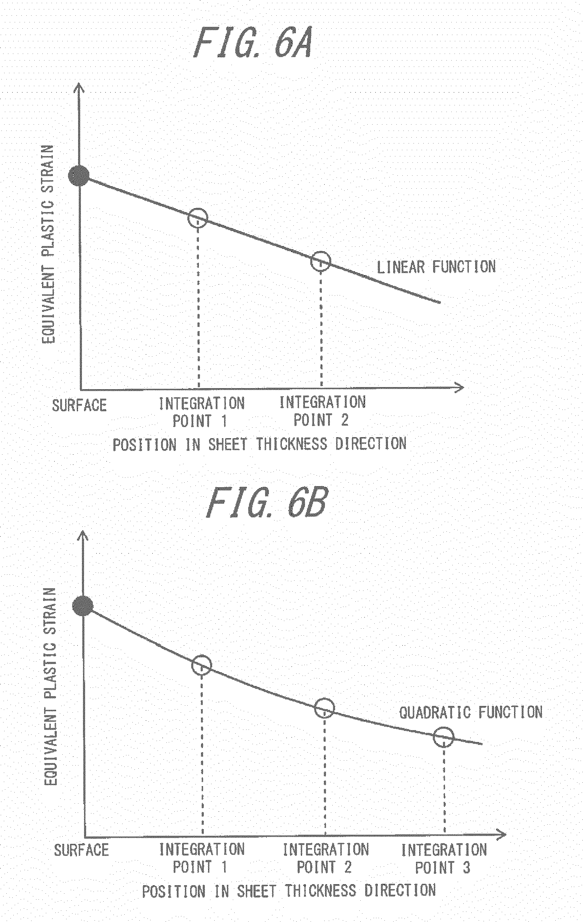

In the case of (B), the equivalent plastic strain in the surface of the hot stamped part 11 is calculated by extrapolation on the equivalent plastic strain at each integration point in the sheet thickness direction, as illustrated in FIGS. 6A and 6B. Examples of the method of calculating the equivalent plastic strain in the surface of the hot stamped part 11 by extrapolation include: linear interpolation on the values of two points (integration points 1 and 2) closer to the surface of the hot stamped part 11 from among the integration points in the sheet thickness direction (FIG. 6A); and secondary interpolation on the values of three points (integration points 1, 2, and 3) closer to the surface of the hot stamped part 11 from among the integration points in the sheet thickness direction (FIG. 6B). Any of the methods may be used as there is no significant difference in the value of equivalent plastic strain obtained by extrapolation.

Meanwhile, the value of equivalent plastic strain differs between the methods (A) and (B). Hence, the correlation between the equivalent plastic strain in the surface layer of the hot stamped part and the maximum micro-crack depth in the hot stamped part needs to be obtained beforehand by the method (A) or (B) depending on the equivalent plastic strain calculation method in the forming analysis step.

As mentioned above, we measured the micro-crack depth in the test piece cut out of each portion of the actually manufactured hot stamped part 11, and conducted a fatigue test on the test piece, to study the relationship between the fatigue life and the micro-crack depth.

As a result, we discovered that micro-cracks with a micro-crack depth of 20 µm or less did not degrade the fatigue life of the hot stamped part 11.

Based on this discovery, the fatigue life of the hot stamped part 11 manufactured under the forming condition set in the forming analysis step can be evaluated in the evaluation step.

In detail, in the case where the maximum micro-crack depth evaluated in the evaluation step is 20 µm or less, the degradation in fatigue life of the hot stamped part 11 manufactured under the forming condition can be evaluated as being within the tolerable range.

In the case where the maximum micro-crack depth evaluated in the evaluation step is more than 20 µm, the degradation in fatigue life of the hot stamped part 11 manufactured under the forming condition can be evaluated as being outside the tolerable range.

In the evaluation step, the maximum micro-crack depth may be evaluated using the equivalent plastic strain in the surface layer of the whole hot stamped part 11 at the press bottom dead center calculated by the forming analysis. However, micro-cracks tend to occur in the vertical wall portion 15 of the hot stamped part 11 where the blank sheet 1 is subjected to bending and bend restoration deformation during the press forming, particularly the portion of the vertical wall portion 15 coming into contact with the shoulder R end of the die during the forming as indicated by circle A in FIG. 2.

Accordingly, there is practically no problem even when the equivalent plastic strain is calculated only for the surface layer near the portion of the vertical wall portion 15 of the hot stamped part 11 in a hat cross-sectional shape coming into contact with the shoulder R end of the die during the forming in the forming analysis step so that, in the evaluation step. the maximum micro-crack depth in the hot stamped part 11 is evaluated from the equivalent plastic strain calculated in the forming analysis step. The time and effort for the evaluation can be saved in this way.

### (Embodiment 2)

Embodiment 2 of the disclosure relates to a method of manufacturing a hot stamped part. In the method, when manufacturing a hot stamped part by hot stamping a coated steel sheet (blank sheet) having a Zn-Ni coating layer on the surface of a base steel sheet, such a forming condition that can suppress micro-cracks causing a decrease in fatigue life is determined, and the hot stamped part is actually manufactured under the forming condition.

The method of manufacturing a hot stamped part according to Embodiment 2 of the disclosure includes an analysis model setting step (S1), a forming condition setting step (S3), a forming analysis step (S5), a forming condition determination step (S7'), a forming condition change step (S9), and a formed part manufacturing step (S11), as illustrated in FIG. 7.

Of these steps, the analysis model setting step (S1), the forming condition setting step (S3), the forming analysis step (S5), and the forming condition determination step (S7') are performed using a computer.

In Embodiment 2, the analysis model setting step, the forming condition setting step, and the forming analysis step are the same as those in the foregoing Embodiment 1. The forming condition determination step, the forming condition change step, and the formed part manufacturing step are described in detail below. The hot stamped part 11 used in Embodiment 2 is the same as that in the foregoing Embodiment 1. and so its description is omitted here.

### <Forming condition determination step>

The forming condition determination step (S7') is a step of evaluating the maximum micro-crack depth based on the value of equivalent plastic strain in the surface layer of the hot stamped part 11 obtained in the forming analysis step (S5). and determining the appropriateness of the forming condition set in the forming condition setting step depending on the evaluated maximum micro-crack depth.

For example, the forming condition set in the forming condition setting step is determined as appropriate in the case where the evaluated maximum micro-crack depth is 20 µm or less, and determined as not appropriate in the case where the evaluated maximum micro-crack depth is more than 20 µm.

In the forming condition determination step as in the evaluation step, it is important to use the correlation between the equivalent plastic strain in the surface layer of the hot stamped part and the maximum micro-crack depth in the hot stamped part which has been obtained beforehand, when evaluating the maximum micro-crack depth.

The equivalent plastic strain in the surface layer of the hot stamped part used in the forming condition determination step is any of: (A) the value of equivalent plastic strain at the integration point closest to the surface of the hot stamped part 11 (preferably at the same depth position within 30 µm from the surface) (FIG. 6A); and (B) the value of equivalent plastic strain in the surface of the hot stamped part 11 calculated by extrapolation on the value of equivalent plastic strain at each integration point in the sheet thickness direction (FIG. 6B).

Here, the value of equivalent plastic strain differs between the methods (A) and (B). Hence, the correlation between the equivalent plastic strain in the surface layer of the hot stamped part and the maximum micro-crack depth in the hot stamped part needs to be obtained beforehand by the method (A) or (B) depending on the equivalent plastic strain calculation method in the forming analysis step.

In the forming condition determination step, the maximum micro-crack depth may be evaluated using the equivalent plastic strain in the surface layer of the whole hot stamped part 11 at the press bottom dead center calculated by the forming analysis. However, micro-cracks tend to occur in the vertical wall portion 15 of the hot stamped part 11 where the blank sheet 1 is subjected to bending and bend restoration deformation during the press forming, particularly the portion of the vertical wall portion 15 coming into contact with the shoulder R end of the die during the forming as indicated by circle A in FIG. 2.

Accordingly, there is practically no problem even when the equivalent plastic strain is calculated only for the surface layer near the portion of the vertical wall portion 15 of the hot stamped part 11 in a hat cross-sectional shape coming into contact with the shoulder R end of the die during the forming in the forming analysis step so that, in the forming condition determination step, the maximum micro-crack depth in the hot stamped part 11 is evaluated from the equivalent plastic strain calculated in the forming analysis step to determine the appropriateness of the forming condition. The time and effort for the evaluation can be saved in this way.

### <Forming condition change step>

The forming condition change step (S9) is a step of changing the forming condition in the case where the forming condition is determined as not appropriate, i.e. not sufficient to suppress micro-cracks causing a decrease in fatigue life, in the forming condition determination step (S7').

In the case where the forming condition is changed in the forming condition change step (S9), the forming analysis step (S5) and the forming condition determination step (S7') are performed again under the changed forming condition, and the forming condition change step (S9), the forming analysis step (S5). and the forming condition determination step (S7') arc repeated until the forming condition is determined as appropriate in the forming condition determination step (S7').

Examples of the forming condition that are changed include the press forming method, the blank holding force, the displacement-time curve of the die used for press forming the heated steel sheet, and the initial temperature of the steel sheet at the press forming start.

### <Formed part manufacturing step>

The formed part manufacturing step (S11) is a step of actually manufacturing the hot stamped part by performing hot stamping under the forming condition determined as appropriate in the forming condition determination step (S7').

For example, the formed part manufacturing step performs hot stamping of the coated steel sheet (blank sheet 1) having the Zn-Ni coating layer on the surface of the steel sheet, and includes: a press forming step of press forming the blank sheet 1 heated to the temperature range of the Ac₃ transformation temperature or more and 1000 °C or less, using the die 3, the blank holder 5, and a punch 7: and a quenching step of quenching the blank sheet 1 while sandwiching and holding the blank sheet 1 by the tool of press forming.

Here, the coated steel sheet having the Zn-Ni coating layer on the surface of the steel sheet is used as the raw material (blank sheet 1) of the hot stamped part. The formation of the Zn-Ni coating layer on the surface of the steel sheet ensures the corrosion resistance of the hot stamped part.

The method of forming the Zn-Ni coating layer on the surface of the steel sheet is not particularly limited, and may be any method such as hot dip coating or electroplating. The coating weight is preferably 10 g/m² or more per side. The coating weight is preferably 90 g/m² or less per side.

The Ni content in the coating layer is preferably 9 mass% or more. The Ni content in the coating layer is preferably 25 mass% or less. Particularly in the case where the Zn-Ni coating layer is formed on the surface of the steel sheet by electroplating. γ phase having a crystal structure of any of Ni₂Zn₁₁, NiZn₃, and Ni₅Zn₂₁ is formed when the Ni content in the coating layer is 9 mass% or more and 25 mass% or less. This γ phase has a high fusing point, and so is advantageous in suppressing the evaporation of the coating layer which may occur during the heating of the blank sheet I before the press forming. The γ phase is also advantageous in suppressing liquid metal embrittlement cracking problematic in the hot stamping.

The blank sheet 1 is preferably heated to the temperature range of the Ac₃ transformation temperature or more and 1000 °C or less. If the heating temperature of the blank sheet 1 is less than the Ac₃ transformation temperature, an appropriate amount of austenite is not obtained during the heating, and the presence of ferrite during the press forming makes it difficult to achieve sufficient strength after the hot stamping and ensure favorable dimensional accuracy of the part after springback. If the heating temperature of the blank sheet I is more than 1000 °C, the evaluation of the coating layer or the formation of excessive oxide in the surface layer causes a decrease in resistance to oxidation or corrosion resistance of the hot stamped part. Therefore, the heating temperature is preferably the Ac₃ transformation temperature or more. The heating temperature is preferably 1000 °C or less. The heating temperature is more preferably the Ac₃ transformation temperature + 30 °C or more. The heating temperature is more preferably 950 °C or less.

The method of heating the coated steel sheet 1 is not particularly limited, and may be any heating method using an electric heating furnace, an induction heating furnace, or a direct current furnace.

The press forming method is not particularly limited. For example, deep drawing of performing forming while sandwiching the blank sheet 1 between the die 3 and the blank holder 5 as illustrated in FIG. 3A or crash forming of performing forming as illustrated in FIG. 3B is suitable. Crash forming with a lower working ratio of the vertical wall portion is preferable in terms of suppressing micro-cracks.

Moreover, a pad may be used.

The press machine is not particularly limited. A servo press may be used in the case of changing the moving speed of a slide or performing such control that temporarily stops the slide.

The quenching step is a step of quenching the blank sheet 1 while sandwiching the blank sheet 1 by the tool of press forming and holding it at the press bottom dead center. To quench the blank sheet 1 using the tool of press forming after the press forming, the slide is preferably stopped at the press bottom dead center after the press forming. The stopping time differs depending on the amount of heat removal by the tool of press forming, but is preferably 3 seconds or more.

The manufacturing condition of the blank sheet 1 used as the raw material of the hot stamped part is not particularly limited. The manufacturing condition of the steel sheet is not particularly limited, either. For example. the steel sheet may be a hot rolled steel sheet (pickled steel sheet) having a predetermined component composition or a cold rolled steel sheet obtained by cold rolling the hot rolled steel sheet.

The condition when forming the Zn-Ni coating layer on the surface of the steel sheet to obtain the blank sheet 1 is not particularly limited. In the case of using the hot rolled steel sheet (pickled steel sheet) as the steel sheet, the blank sheet 1 can be obtained by subjecting the hot rolled steel sheet (pickled steel sheet) to Zn-Ni coating treatment.

In the case of using the cold rolled steel sheet as the steel sheet, the blank sheet 1 can be obtained by subjecting the cold rolled steel sheet to Zn-Ni coating treatment.

For example, the Zn-Ni coating layer can be formed on the surface of the steel sheet by alkaline cleaning and pickling the steel sheet and then electroplating the steel sheet with a current density of 10 A/dm² or more and 150 A/dm² or less in a molten bath that contains 100 g/L or more and 400 g/L or less nickel sulfate hexahydrate and 10 g/L or more and 400 g/L or less zinc sulfate heptahydrate and has a pH of 1.0 or more and 3.0 or less and a bath temperature of 30 °C or more and 70 °C or less. In the case of using the cold rolled steel sheet as the steel sheet, the cold rolled steel sheet may be annealed before alkaline cleaning and pickling. Desired Ni content (e.g. 9 mass% or more and 25 mass% or less) in the coating layer can be realized by adjusting the concentration of the zinc sulfate heptahydrate or the current density within the aforementioned range as appropriate. Desired coating weight (e.g. 10 g/m² or more and 90 g/m² or less per side) of the Zn-Ni coating layer can be realized by adjusting the energizing time.

As described above, a hot stamped part with no micro-cracks causing a decrease in fatigue life can be manufactured by performing forming analysis as in Embodiment 1, evaluating the occurrence of micro-cracks causing a decrease in fatigue life based on the value of equivalent plastic strain in the surface layer of the hot stamped part 11 at the press bottom dead center, and actually manufacturing the hot stamped part 11 under the forming condition evaluated as not inducing such micro-cracks.

### EXAMPLES

An example for determining the advantageous effects of the method of evaluating a hot stamped part according to the disclosure is described below.

In this example, the maximum micro-crack depth in a hot stamped part 31 (see FIG. 8) in a hat cross-sectional shape including a top portion 33, a vertical wall portion 35, and a flange portion 37 and manufactured using a blank sheet of 400 mm in length. 200 mm in width, and 1.2 mm in sheet thickness was evaluated.

The blank sheet was a Zn-12%Ni coated steel sheet (Ni content: 12 mass%) with a coating weight of 40 g/m².

The blank sheet was heated to 900 °C in an electric heating furnace, and held at 900 °C for 60 seconds. The blank sheet was then conveyed to a press machine, and hot stamping was started when the blank sheet reached 700 °C. In the press forming, the blank sheet was held at the press bottom dead center for 20 seconds and quenched, and then released from the die, thus obtaining the hot stamped part 31.

Table I shows the forming conditions in this example. Two types of press forming method were used: deep drawing of blank holding the blank sheet by the blank holder 5 (FIG. 3A): and crash forming of fixing the blank holder 5 at the position of the press bottom dead center so as not to perform blank holding during the press forming (FIG. 3B). The blank holding force in the deep drawing was 100 kN.

### [Table 1]

**Table 1**

| No. | Heating temperature (°C) | Holding time at heating temperature (sec) | Press forming start temperature (°C) | Press forming method | Blank holding force (kN) | Holding time at press bottom dead center (sec) |
|---|---|---|---|---|---|---|
| 1 | 900 | 60 | 700 | Deep drawing | 100 | 20 |
| 2 | 900 | 60 | 700 | Crush forming | - | 20 |

The obtained hot stamped part 31 was cut at the center in the longitudinal direction along a section perpendicular to the longitudinal direction, and the micro-crack depth h on the front side (die side) of the hot stamped part 31 in the vertical wall portion 35 was measured.

Here, the micro-crack depth h was measured using a scanning electron microscope (SEM) (1000 magnifications), as the distance from the interface between the coating layer 23 and the substantial steel (steel sheet) 25 to the end of the micro-crack 21 as illustrated in FIG. 4.

With any press forming method of deep drawing and crash forming, the maximum micro-crack depth (the maximum depth of micro-cracks) was measured in the portion (indicated by circle A in FIG. 8) of the vertical wall portion 35 coming into contact with the shoulder R end of the die during the forming, and there was a tendency that the micro-crack in this portion was deeper than the micro-crack in any other portion of the vertical wall portion 35.

Table 2 shows the maximum micro-crack depth measurement results. As shown in Table 2. in the case of deep drawing, the maximum micro-crack depth was 24 µm, i.e. a depth of 20 µm or more which could degrade fatigue life. In the case of crash forming, on the other hand, the maximum micro-crack depth was 17 µm, i.e. a depth of 20 µm or less which could hardly degrade fatigue life.

The maximum micro-crack depth in the hot stamped part 31 was then evaluated based on the method of evaluating a hot stamped part according to the disclosure.

First, in the analysis model setting step (S1), the hot stamped part was modeled using shell elements (element size: 2 mm × 2 mm). 7 integration points in the sheet thickness direction of the blank sheet as the raw material of the hot stamped part were set in the center of each shell element. The thermal properties and mechanical properties of the blank sheet and tool of press forming were temperature-dependent data.

Next, in the forming condition setting step (S3), each condition shown in Table 1 was set as the forming condition, where deep drawing (FIG. 3A) or crash forming (FIG. 3B) was used as the press forming method.

In the case of deep drawing (FIG. 3A), in the state of sandwiching the blank sheet 1 between the die 3 and the blank holder 5 with a constant blank holding force of 100 kN, the blank sheet I was pressed against the punch 7 to be press formed.

In the case of crash forming (FIG. 3B), the blank holder 5 was fixed at the position of the press bottom dead center, and the blank sheet 1 was not sandwiched between the blank holder 5 and the die 3.

In the forming analysis step (S5), forming analysis was performed under the aforementioned forming condition.

This forming analysis was thermal/structural coupled analysis coupling thermal analysis and structural analysis. In this example, no thermal analysis was performed for the heating of the blank sheet and the cooling during the conveyance from the heating device to the press machine, and the temperature of the blank sheet at the hot stamping start was set to 700 °C. In any press forming method of deep drawing and crash forming, the hot press forming analysis was performed up to the press bottom dead center, and the equivalent plastic strain ε in the surface layer of the hot stamped part 31 at the press bottom dead center was calculated.

In the subsequent evaluation step (S7), based on the obtained maximum equivalent plastic strain in the front-side (die contact side) outermost layer of the vertical wall portion 35 at the press bottom dead center (the equivalent plastic strain at the integration point closest to the die contact-side surface of the hot stamped part 31). the maximum micro-crack depth in the portion was evaluated.

Table 2 shows the maximum equivalent plastic strain obtained by the forming analysis and the maximum micro-crack depth evaluation value and measurement value.

In Table 2, the maximum equivalent plastic strain is the maximum value of equivalent plastic strain at the integration point of 30 µm in the depth direction from the surface of the hot stamped part 31. The maximum micro-crack depth evaluation value is the result of evaluation from the maximum equivalent plastic strain, using the correlation between the equivalent plastic strain in the surface layer of the hot stamped part and the maximum micro-crack depth in the hot stamped part illustrated in FIG. 5.

### [Table 2]

**Table 2**

| No. | Press forming method | Maximum equivalent plastic strain | Maximum micro-crack depth (µm) | |
|---|---|---|---|---|
| | | | Evaluation value | Measurement value |
| 1 | Deep drawing | 0.32 | 22.2 | 24 |
| 2 | Crash forming | 0.28 | 18.3 | 17 |

In both forming conditions, the maximum equivalent plastic strain was found in the portion of the vertical wall portion 35 coming into contact with the shoulder R end of the die 3 during the forming (the portion indicated by circle A in FIG. 8).

In the case of using the forming condition No. 1, the maximum equivalent plastic strain was 0.32, and the maximum micro-crack depth (evaluation value) evaluated based on the correlation illustrated in FIG. 5 was 22.2 µm. The hot stamped part 31 manufactured under the forming condition No. 1 was thus evaluated as having micro-cracks causing a decrease in fatigue life.

In the case of using the forming condition No. 2, the maximum equivalent plastic strain was 0.28, and the maximum micro-crack depth (evaluation value) evaluated based on the correlation illustrated in FIG. 5 was 18.3 µm. The hot stamped part 31 manufactured under the forming condition No. 2 was thus evaluated as having no micro-cracks causing a decrease in fatigue life.

The maximum micro-crack depth evaluated from the equivalent plastic strain calculated by the forming analysis has common tendency with the maximum micro-crack depth measured in the actually manufactured hot stamped part 31. As a result of collecting a test piece from the hot stamped part actually manufactured under each forming condition and conducting a fatigue test, the hot stamped part manufactured under the forming condition No. 1 had degraded fatigue life, whereas the hot stamped part manufactured under the forming condition No. 2 had no degraded fatigue life. These results demonstrate the validity of the method of evaluating a hot stamped part according to the disclosure.

As described above, by evaluating the maximum micro-crack depth in the hot stamped part manufactured under the forming condition based on the equivalent plastic strain in the surface layer of the hot stamped part calculated by forming analysis, whether or not micro-cracks causing a decrease in fatigue resistance of the hot stamped part occur can be evaluated simply and appropriately.

Moreover, such a forming condition that can suppress micro-cracks causing a decrease in fatigue resistance can be selected simply without requiring a lot of time and cost, as compared with the method of actually manufacturing a hot stamped part under each of various hot stamping conditions and measuring the micro-crack depth of a test piece cut out of each hot stamped part. By actually manufacturing the hot stamped part based on this forming condition, a hot stamped part with excellent fatigue resistance can be manufactured without micro-cracks.

### REFERENCE SIGNS LIST

- 1: blank sheet
- 3: die
- 4: shoulder R end of die
- 5: blank holder
- 7: punch
- 11: hot stamped part
- 13: top portion
- 15: vertical wall portion
- 17: flange portion
- 21: micro-crack
- 23: coating layer
- 25: substantial steel (steel sheet)
- 31: hot stamped part
- 33: top portion
- 35: vertical wall portion
- 37: flange portion

## Claims

1. A method of predicting the fatigue life of a hot stamped part (11) having a Zn-Ni alloy coating layer (23) in which about 9 mass% to 25 mass% Ni is contained in Zn as a coating layer with a high fusing point of 860 °C or more on a surface of a base steel sheet, the method comprising the following steps performed using a computer:
an analysis model setting step of setting an analysis model of the hot stamped part (11); and setting thermal properties and mechanical properties of a tool of press forming and a blank sheet of the analysis model, the thermal properties and mechanical properties being temperature-dependent data;
wherein the hot stamped part (11) is formed using a die (3) and a punch (7), includes a top portion (13), a vertical wall portion (15), and a flange portion (17), and has a hat cross-sectional shape;
a forming condition setting step of setting a forming condition of the hot stamping and taking a temperature history of the blank sheet (1) of the analysis model into consideration;
a forming analysis step of performing forming analysis using the analysis model under the forming condition, and calculating an equivalent plastic strain in a surface layer of the hot stamped part (11), the forming analysis being thermal/structural coupled analysis coupling thermal analysis and structural analysis; and
an evaluation step of evaluating a maximum micro-crackdepth , based on the equivalent plastic strain, using a correlation between analyzed equivalent plastic strain in the surface layer of the hot stamped part (11) and maximum micro-crack depth in the hot stamped part (11), the correlation being obtained beforehand, and
a portion subjected to the evaluation of the maximum micro-crack depth in the evaluation step is a portion of the vertical wall portion (15) coming into contact with a shoulder R end of the die (4) during the forming,
wherein in the case where the maximum micro-crack depth evaluated in the evaluation step is 20 µm or less, degradation in fatigue life of the hot stamped part (11) manufactured under the forming condition is evaluated as being within a tolerable range, and
in the case where the maximum micro-crack depth evaluated in the evaluation step is more than 20 µm, degradation in fatigue life of the hot stamped part (11) manufactured under the forming condition is evaluated as being outside the tolerable range.

2. The method according to claim 1,
wherein in the forming analysis step, the surface layer is a region of up to 30 µm in a depth direction from a surface of the hot stamped part (11).

3. A method of manufacturing a hot stamped part (11) having a coated steel sheet having a Zn-Ni alloy coating layer (23) in which about 9 mass% to 25 mass% Ni is contained in Zn as a coating layer with a high fusing point of 860 °C or more on a surface of a base steel sheet, the method comprising the following steps performed using a computer:
an analysis model setting step of setting an analysis model of the hot stamped part; and setting thermal properties and mechanical properties of a tool of press forming and a blank sheet of the analysis model, the thermal properties and mechanical properties being temperature-dependent data;
wherein the hot stamped part (11) is formed using a die (3) and a punch (7), includes a top portion (13), a vertical wall portion (15), and a flange portion (17), and has a hat cross-sectional shape,
a forming condition setting step of setting a forming condition of the hot stamping, and taking a temperature history of the blank sheet (1) of the analysis model into consideration;
a forming analysis step of performing forming analysis using the analysis model under the forming condition, and calculating an equivalent plastic strain in a surface layer of the hot stamped part (11), the forming analysis being thermal/structural coupled analysis coupling thermal analysis and structural analysis;
a forming condition appropriateness determination step of evaluating, based on the equivalent plastic strain, a maximum micro-crack depth in the hot stamped part (11) under the forming condition, and determining appropriateness of the forming condition depending on the evaluated maximum micro-crack depth;
wherein the maximum micro-crack depth is evaluated using a correlation between analyzed equivalent plastic strain in the surface layer of the hot stamped part (11) and maximum micro-crack depth in the hot stamped part (11), the correlation being obtained beforehand; and
a portion subjected to the evaluation of the maximum micro-crack depth in the forming condition appropriateness determination step is a portion of the vertical wall portion (15) coming into contact with a shoulder R end of the die (4) during the forming;
wherein the analysis model setting step, the forming condition setting step, the forming analysis step, and the forming condition appropriateness determination step are performed using a computer,
a formed part manufacturing step of actually manufacturing the hot stamped part (11) under the forming condition, in the case where the forming condition is determined as appropriate in the forming condition appropriateness determination step; and
a forming condition change step of changing the forming condition, in the case where the forming condition is determined as not appropriate in the forming condition appropriateness determination step,
in the case where the forming condition is changed in the forming condition change step, the forming analysis step and the forming condition determination step are performed again under the changed forming condition.

4. The method of manufacturing a hot stamped part (11) according to claim 3,
wherein in the forming condition determination step, the forming condition is determined as appropriate in the case where the evaluated maximum micro-crack depth is 20 µm or less, and determined as not appropriate in the case where the evaluated maximum micro-crack depth is more than 20 µm.

5. The method of manufacturing a hot stamped part (11) according to any one of claims 3 or 4,
wherein in the forming analysis step, the surface layer is a region of up to 30 µm in a depth direction from a surface of the hot stamped part (11).

## Patentansprüche

1. Verfahren zum Vorhersagen der Ermüdungslebensdauer eines pressgehärteten Teils (11) mit einer Überzugsschicht (23) aus Zn-Ni-Legierung, in der ungefähr 9 Masse-% bis 25 Masse-% Ni in Zn enthalten ist, als einer Überzugsschicht mit einem hohen Schmelzpunkt von 860 °C oder höher an einer Oberfläche eines Träger-Stahlblechs, wobei das Verfahren die folgenden Schritte umfasst, die unter Einsatz eines Computers durchgeführt werden:
einen Schritt zum Festlegen eines Analysemodells, in dem ein Analysemodell des pressgehärteten Teils (11) festgelegt wird und thermische Eigenschaften sowie mechanische Eigenschaften eines Pressform-Werkzeugs und eines Rohblechs des Analysemodells festgelegt werden, wobei die thermischen Eigenschaften und die mechanischen Eigenschaften temperaturabhängige Daten sind;
wobei das pressgehärtete Teil (11) unter Verwendung einer Matrize (3) und eines Stempels (7) geformt wird, einen oberen Abschnitt (13), einen vertikalen Wandabschnitt (15) sowie einen Flanschabschnitt (17) enthält und einen hutförmigen Querschnitt hat;
einen Schritt zum Festlegen einer Umform-Bedingung, in dem eine Umform-Bedingung des Presshärtens eingestellt wird und ein Temperaturverlauf des Rohblechs (1) des Analysemodells berücksichtigt wird;
einen Schritt für Umform-Analyse, in dem unter Verwendung des Analysemodells unter der Umform-Bedingung Umform-Analyse durchgeführt wird und eine äquivalente plastische Dehnung in einer Oberflächenschicht des pressgehärteten Teils (11) berechnet wird, wobei die Umform-Analyse thermisch/strukturell gekoppelte Analyse ist , bei der thermische Analyse und strukturelle Analyse gekoppelt werden; und
einen Bewertungsschritt, in dem eine maximale Mikroriss-Tiefe auf Basis der äquivalenten plastischen Dehnung unter Verwendung einer Korrelation zwischen analysierter äquivalenter plastischer Dehnung in der Oberflächenschicht des pressgehärteten Teils (11) und maximaler Mikroriss-Tiefe in dem pressgehärteten Teil (11) bewertet wird, wobei die Korrelation im Voraus ermittelt wird, und
ein Abschnitt, der in dem Bewertungsschritt der Bewertung der maximalen Mikroriss-Tiefe unterzogen wird, ein Abschnitt des vertikalen Wandabschnitts (15) ist, der während des Umformens mit einem abgerundeten Absatzende der Matrize (4) in Kontakt kommt,
wobei, wenn die in dem Bewertungsschritt bewertete maximale Mikroriss-Tiefe 20 µm oder weniger beträgt, Verschlechterung der Ermüdungslebensdauer des unter der Umform-Bedingung hergestellten pressgehärteten Teils (11) als innerhalb eines tolerierbaren Bereiches liegend bewertet wird, und
wenn die in dem Bewertungsschritt bewertete maximale Mikroriss-Tiefe mehr als 20 µm beträgt, Verschlechterung der Ermüdungslebensdauer des unter der Umform-Bedingung hergestellten pressgehärteten Teils (11) als außerhalb des tolerierbaren Bereiches liegend bewertet wird.

2. Verfahren nach Anspruch 1,
wobei in dem Schritt für Umform-Analyse die Oberflächenschicht ein Bereich von bis zu 30 µm in einer Tiefenrichtung von einer Oberfläche des pressgehärteten Teils (11) aus ist.

3. Verfahren zum Herstellen eines pressgehärteten Teils (11) mit einer Überzugsschicht (23) aus Zn-Ni-Legierung, in der ungefähr 9 Masse-% bis 25 Masse-% Ni in Zn enthalten ist, als einer Überzugsschicht mit einem hohen Schmelzpunkt von 860 °C oder höher an einer Oberfläche eines Träger-Stahlblechs, wobei das Verfahren die folgenden Schritte umfasst, die unter Einsatz eines Computers durchgeführt werden:
einen Schritt zum Festlegen eines Analysemodells, in dem ein Analysemodell des pressgehärteten Teils festgelegt wird und thermische Eigenschaften sowie mechanische Eigenschaften eines Pressform-Werkzeugs und eines Rohblechs des Analysemodells festgelegt werden, wobei die thermischen Eigenschaften und die mechanischen Eigenschaften temperaturabhängige Daten sind;
wobei das pressgehärtete Teil (11) unter Verwendung einer Matrize (3) und eines Stempels (7) geformt wird, einen oberen Abschnitt (13), einen vertikalen Wandabschnitt (15) sowie einen Flanschabschnitt (17) enthält und einen hutförmigen Querschnitt hat;
einen Schritt zum Festlegen einer Umform-Bedingung, in dem eine Umform-Bedingung des Presshärtens eingestellt wird und ein Temperaturverlauf des Rohblechs (1) des Analysemodells berücksichtigt wird;
einen Schritt für Umform-Analyse, in dem unter Verwendung des Analysemodells unter der Umform-Bedingung Umform-Analyse durchgeführt wird und eine äquivalente plastische Dehnung in einer Oberflächenschicht des pressgehärteten Teils (11) berechnet wird, wobei die Umform-Analyse thermisch/strukturell gekoppelte Analyse ist , bei der thermische Analyse und strukturelle Analyse gekoppelt werden;
einen Schritt für Bestimmung von Eignung der Umform-Bedingung, in dem auf Basis der äquivalenten plastischen Dehnung eine maximale Mikroriss-Tiefe in dem pressgehärteten Teil (11) unter der Umform-Bedingung bewertet wird und Eignung der Umform-Bedingung in Abhängigkeit von der bewerteten maximalen Mikroriss-Tiefe bestimmt wird;
wobei die maximale Mikroriss-Tiefe unter Verwendung einer Korrelation zwischen analysierter äquivalenter plastischer Dehnung in der Oberflächenschicht des pressgehärteten Teils (11) und maximaler Mikroriss-Tiefe in dem pressgehärteten Teil (11) bewertet wird, und die Korrelation im Voraus ermittelt wird, und
ein Abschnitt, der in dem Schritt für Bestimmung von Eignung der Umform-Bedingung der Bewertung der maximalen Mikroriss-Tiefe unterzogen wird, ein Abschnitt des vertikalen Wandabschnitts (15) ist, der während des Umformens mit einem abgerundeten Absatzende der Matrize (4) in Kontakt kommt;
wobei der Schritt zum Festlegen eines Analysemodells, der Schritt zum Festlegen der Umform-Bedingung, der Schritt für Umform-Analyse und der Schritt für Bestimmung von Eignung der Umform-Bedingung unter Einsatz eines Computers durchgeführt werden,
einen Schritt zum Herstellen eines umgeformten Teils, in dem das pressgehärtete Teil (11) unter der Umform-Bedingung tatsächlich hergestellt wird, wenn die Umform-Bedingung in dem Schritt für Bestimmung von Eignung der Umform-Bedingung als geeignet bestimmt wird; und
einen Schritt für Änderung der Umform-Bedingung, in dem die Umform-Bedingung geändert wird, wenn die Umform-Bedingung in dem Schritt für Bestimmung von Eignung der Umform-Bedingung als nicht geeignet bestimmt wird,
wenn die Umform-Bedingung in dem Schritt zum Ändern der Umform-Bedingung geändert wird, der Schritt für Umform-Analyse und der Schritt für Bestimmung der Umform-Bedingung unter der geänderten Umform-Bedingung erneut durchgeführt werden.

4. Verfahren zum Herstellen eines pressgehärteten Teils (11) nach Anspruch 3, wobei in dem Schritt für Bestimmung der Umform-Bedingung die Umform-Bedingung dann als geeignet bestimmt wird, wenn die bewertete maximale Mikroriss-Tiefe 20 µm oder weniger beträgt, und als nicht geeignet bestimmt wird, wenn die bewertete maximale Mikroriss-Tiefe mehr als 20 µm beträgt.

5. Verfahren zum Herstellen eines pressgehärteten Teils (11) nach einem der Ansprüche 3 oder 4,
wobei in dem Schritt für Umform-Analyse die Oberflächenschicht ein Bereich von bis zu 30 µm in einer Tiefenrichtung von einer Oberfläche des pressgehärteten Teils (11) aus ist.

## Revendications

1. Procédé de prédiction de la durée de vie d'une pièce estampée à chaud (11) présentant une couche de revêtement en alliage Zn-Ni (23) dans laquelle environ 9 % de masse à 25 % de masse de Ni est contenu dans du Zn sous la forme d'une couche de revêtement avec un point de fusion haut de 860 °C ou plus sur une surface d'une tôle d'acier de base, le procédé comprenant les étapes suivantes exécutées au moyen d'un ordinateur :
une étape de définition de modèle d'analyse de définition d'un modèle d'analyse de la pièce estampée à chaud (11) ; et une définition de propriétés thermiques et de propriétés mécaniques d'un outil de formage à la presse et d'une feuille blanche du modèle d'analyse, les propriétés thermiques et propriétés mécaniques étant des données dépendantes de la température ;
dans lequel la pièce estampée à chaud (11) est constituée en utilisant une matrice (3) et un poinçon (7), inclut une partie supérieure (13), une partie de paroi verticale (15) et une partie de bride (17), et présente une forme transversale de chapeau ;
une étape de définition de condition de formage de définition d'une condition de formage de l'estampage à chaud et une prise en considération d'un historique de température de la feuille blanche (1) du modèle d'analyse ;
une étape d'analyse de formage d'exécution d'une analyse de formage en utilisant le modèle d'analyse sous la condition de formage, et un calcul d'une contrainte plastique équivalente dans une couche de surface de la pièce estampée à chaud (11), l'analyse de formage étant une analyse thermique/structurelle couplée couplant une analyse thermique et une analyse structurelle ; et
une étape d'évaluation d'évaluation d'une profondeur de micro-fissure maximale, selon la contrainte plastique équivalente, en utilisant une corrélation entre une contrainte plastique équivalente analysée dans la couche de surface de la pièce estampée à chaud (11) et une profondeur de micro-fissure maximale dans la pièce estampée à chaud (11), la corrélation étant obtenue au préalable, et
une partie sujette à l'évaluation de la profondeur de micro-fissure maximale à l'étape d'évaluation est une partie de la partie de paroi verticale (15) entrant en contact avec une extrémité R d'épaule de la matrice (4) au cours du formage,
dans lequel dans le cas où la profondeur de micro-fissure maximale évaluée à l'étape d'évaluation est de 20 µm ou moins, une dégradation en durée de vie de la pièce estampée à chaud (11) fabriquée sous la condition de formage est évaluée comme présente au sein d'une plage tolérable, et
dans le cas où la profondeur de micro-fissure maximale évaluée à l'étape d'évaluation est de plus de 20 µm, une dégradation en durée de vie de la pièce estampée à chaud (11) fabriquée sous la condition de formage est évaluée comme présente hors de la plage tolérable.

2. Le procédé selon la revendication 1,
dans lequel à l'étape d'analyse de formage, la couche de surface est une zone allant jusqu'à 30 µm dans une direction de profondeur depuis une surface de la pièce estampée à chaud (11).

3. Procédé de fabrication d'une pièce estampée à chaud (11) présentant une tôle d'acier à revêtement présentant une couche de revêtement en alliage Zn-Ni (23) dans laquelle environ 9 % de masse à 25 % de masse de Ni est contenu dans du Zn sous la forme d'une couche de revêtement avec un point de fusion haut de 860 °C ou plus sur une surface d'une tôle d'acier de base, le procédé comprenant les étapes suivantes exécutées au moyen d'un ordinateur :
une étape de définition de modèle d'analyse de définition d'un modèle d'analyse de la pièce estampée à chaud ; et une définition de propriétés thermiques et de propriétés mécaniques d'un outil de formage à la presse et d'une feuille blanche du modèle d'analyse, les propriétés thermiques et les propriétés mécaniques étant des données dépendantes de la température ;
dans lequel la pièce estampée à chaud (11) est constituée en utilisant une matrice (3) et un poinçon (7), inclut une partie supérieure (13), une partie de paroi verticale (15) et une partie de bride (17), et présente une forme transversale de chapeau,
une étape de définition de condition de formage de définition d'une condition de formage de l'estampage à chaud et une prise en considération d'un historique de température de la feuille blanche (1) du modèle d'analyse ;
une étape d'analyse de formage d'exécution d'une analyse de formage en utilisant le modèle d'analyse sous la condition de formage, et un calcul d'une contrainte plastique équivalente dans une couche de surface de la pièce estampée à chaud (11), l'analyse de formage étant une analyse thermique/structurelle couplée couplant une analyse thermique et une analyse structurelle ;
une étape de détermination d'une pertinence de condition de formage d'évaluation, selon la contrainte plastique équivalente, d'une profondeur de micro-fissure maximale dans la pièce estampée à chaud (11) sous la condition de formage, et de détermination de pertinence de la condition de formage selon la profondeur de micro-fissure maximale évaluée ;
dans lequel la profondeur de micro-fissure maximale est évaluée en utilisant une corrélation entre une contrainte plastique équivalente analysée dans la couche de surface de la pièce estampée à chaud (11) et une profondeur de micro-fissure maximale dans la pièce estampée à chaud (11), la corrélation étant obtenue au préalable ; et
une partie sujette à l'évaluation de la profondeur de micro-fissure maximale à l'étape de détermination de pertinence de condition de formage est une partie de la partie de paroi verticale (15) entrant en contact avec une extrémité R d'épaule de la matrice (4) au cours du formage ;
dans lequel l'étape de définition de modèle d'analyse, l'étape de définition de condition de formage, l'étape d'analyse de formage et l'étape de détermination de pertinence de condition de formage sont exécutées en utilisant un ordinateur,
une étape de fabrication de pièce formée de fabrication proprement dite de la pièce estampée à chaud (11) sous la condition de formage, dans le cas où la condition de formage est déterminée comme adaptée à l'étape de détermination de pertinence de condition de formage ; et
une étape de modification de condition de formage de modification de la condition de formage, dans le cas où la condition de formage est déterminée comme inadaptée à l'étape de détermination de pertinence de condition de formage,
dans le cas où la condition de formage est modifiée à l'étape de modification de condition de formage, l'étape d'analyse de formage et l'étape de détermination de condition de formage sont exécutées à nouveau sous la condition de formage modifiée.

4. Le procédé de fabrication d'une pièce estampée à chaud (11) selon la revendication 3,
dans lequel à l'étape de détermination de condition de formage, la condition de formage est déterminée comme adaptée dans le cas où la profondeur de micro-fissure maximale évaluée est de 20 µm ou moins, et déterminée comme inadaptée dans le cas où la profondeur de micro-fissure maximale évaluée est supérieure à 20 µm.

5. Le procédé de fabrication d'une pièce estampée à chaud (11) selon la revendication 3 ou 4,
dans lequel à l'étape d'analyse de formage, la couche de surface est une zone allant jusqu'à 30 µm dans une direction de profondeur depuis une surface de la pièce estampée à chaud (11).
